# EUROPÄISCHE PATENTSCHRIFT

(11) **EP 3 918 898 B1**
(45) Veröffentlichungstag und Bekanntmachung des Hinweises auf die Patenterteilung: **29.10.2025**
(21) Anmeldenummer: 21176457.6
(22) Anmeldetag: 28.05.2021
(51) Int. Cl.: A01C 7/12, A01C 19/02, A01C 7/08

(54) **LANDWIRTSCHAFTLICHE MASCHINE**
AGRICULTURAL MACHINE
ENGIN AGRICOLE

(30) Priorität: 05.06.2020 DE 102020114984
(43) Veröffentlichungstag der Anmeldung: 08.12.2021
(73) Patentinhaber: Horsch Maschinen GmbH, 92421 Schwandorf (DE)
(72) Erfinder: Eckl, Matthias, 92421 Schwandorf (DE); Egelseer, Bastian, 92421 Schwandorf (DE)
(74) Vertreter: v. Bezold & Partner Patentanwälte - PartG mbB

(56) Entgegenhaltungen:
- AT-B- 380 765
- DE-U1- 8 811 286
- GB-A- 2 163 333
- US-A- 6 109 192

## Beschreibung

Die Erfindung betrifft eine landwirtschaftliche Maschine, insbesondere eine Drillmaschine.

In der Landwirtschaft werden zum Aussäen von Saatgut Drillmaschinen eingesetzt, wie sie beispielsweise aus EP 2 832 203 B1 bekannt sind. Diese bekannten Drillmaschinen weisen eine Vielzahl von nebeneinander in einer Reihe angeordneten Dosierern auf, die das Saatgut dosieren. Die einzelnen Dosierer werden hierbei über eine gemeinsame Hauptantriebswelle angetrieben, die durch alle Dosierer durchgeführt ist. Auf dieser Hauptantriebswelle befinden sich die Dosierräder, welche das Saatgut letztendlich dosieren. Die Dosierräder können hierbei ausgetauscht werden, was jedoch eine Demontage der durchgehenden Hauptantriebswelle erfordert.

Weiterhin ist zu erwähnen, dass die einzelnen Dosierer bei der bekannten Drillmaschine gemäß EP 2 832 203 B1 wahlweise als Fahrgassendosierer oder als Normaldosierer konfiguriert werden können. In einem Fahrgassenbetrieb geben dann nur die Normaldosierer Dosiergut ab, während die Fahrgassendosierer im Fahrgassenbetrieb stillgesetzt sind und deshalb kein Dosiergut abgebeben. In einem Normalbetrieb geben dagegen alle Dosierer Dosiergut ab, einschließlich der Fahrgassendosierer, die dann auch angetrieben werden. Der Antrieb der Fahrgassendosierer erfolgt hierbei durch eine zusätzliche Vorgelegewelle, die nur auf die Fahrgassendosierer wirkt, während die Normaldosierer von der durchgehenden Hauptantriebswelle angetrieben werden. Im Fahrgassenbetrieb wird die Vorgelegewelle dann stillgesetzt, so dass die Fahrgassendosierer nicht angetrieben werden und deshalb auch kein Dosiergut abgeben.

Ein Nachteil der vorstehend beschriebenen bekannten Dosiereinrichtungen gemäß EP 2 832 203 B1 ist also der große Aufwand im Zusammenhang mit dem Fahrgassenbetrieb, da hierfür zwei durchgehende Antriebswellen erforderlich sind, nämlich die Hauptantriebswelle zum Antrieb der Normaldosierer und die zusätzliche Vorgelegewelle zum Antrieb der Fahrgassendosierer. Weitere ähnliche landwirtschaftliche Maschinen sind aus der GB 2 163 333 A, der US 6 109 192 A, der DE 88 11 286 U1 und der AT 380 765 B bekannt.

Der Erfindung liegt deshalb die Aufgabe zugrunde, die vorstehend beschriebene bekannte landwirtschaftliche Maschine entsprechend zu verbessern.

Diese Aufgabe wird durch eine erfindungsgemäße landwirtschaftliche Maschine nach Anspruch 1 gelöst.

Hierbei ist zunächst zu erwähnen, dass der im Rahmen der Erfindung verwendete Begriff einer landwirtschaftlichen Maschine allgemein zu verstehen ist und nicht auf das bevorzugte Ausführungsbeispiel einer Drillmaschine beschränkt ist. Vielmehr kann es sich bei der erfindungsgemäßen landwirtschaftlichen Maschine auch um einen anderen Maschinentyp handeln, wie beispielsweise eine Düngemaschine, um nur ein Beispiel zu nennen.

Die erfindungsgemäße landwirtschaftliche Maschine weist zunächst in Übereinstimmung mit der eingangs beschriebenen bekannten Drillmaschine eine drehbar gelagerte Antriebswelle auf, die zum mechanischen Antrieb der Maschine oder von Komponenten der Maschine dient. Gemäß der Erfindung dient die Antriebswelle der Maschine zum Antrieb von mehreren Dosierern der Drillmaschine.

Es wurde eingangs zum Stand der Technik erwähnt, dass die bekannte Drillmaschine in verschiedenen Betriebsarten betrieben werden kann, nämlich zum einen in einem Fahrgassenbetrieb und zum anderen in einem Normalbetrieb. In dem Fahrgassenbetrieb werden die Fahrgassendosierer nicht angetrieben, sondern nur die restlichen Dosierer. In dem Normalbetrieb werden dagegen bei der bekannten Drillmaschine sämtliche Dosierer angetrieben. Diese Umstellung zwischen den verschiedenen Betriebsarten (Fahrgassenbetrieb und Normalbetrieb) ist bei der eingangs beschriebenen bekannten Drillmaschine sehr aufwendig, da hierzu eine zusätzliche Antriebswelle erforderlich ist. Die erfindungsgemäße landwirtschaftliche Maschine zeichnet sich nun dadurch aus, dass die Umstellung zwischen den verschiedenen Betriebsarten (Fahrgassenbetrieb und Normalbetrieb) der Maschine durch eine axiale Verschiebung der Antriebswelle möglich ist.

Hierbei ist zu erwähnen, dass die Erfindung hinsichtlich der verschiedenen Betriebsarten nicht darauf beschränkt ist, dass zwischen dem Fahrgassenbetrieb und dem Normalbetrieb umgeschaltet wird. Das erfindungsgemäße Prinzip einer Betriebsartenauswahl durch eine Verschiebung der Antriebswelle ist vielmehr auch allgemein auf die Umschaltung zwischen anderen Betriebsarten anwendbar.

In dem bevorzugten Ausführungsbeispiel der Erfindung weist die landwirtschaftliche Maschine einen Linearantrieb auf, um die Antriebswelle axial zu verschieben. Beispielsweise kann dieser Linearantrieb pneumatisch, hydraulisch oder elektrisch arbeiten, wobei ein elektromotorischer Antrieb besonders vorteilhaft ist.

Weiterhin ist zu erwähnen, dass die Antriebswelle vorzugsweise in einem Radiaxlager gelagert ist, wobei die Antriebswelle in dem Radiaxlager drehbar ist, wohingegen die Antriebswelle in dem Radiaxlager nicht axial verschiebbar ist. Der Linearantrieb wirkt dabei auf das Radiaxlager und verschiebt das Radiaxlager zusammen mit der Antriebswelle. Zum einen ermöglicht das Radiaxlager also das Aufbringen axialer Kräfte von dem Linearantrieb auf die Antriebswelle, weswegen das Radiaxlager als Axiallager wirken muss. Zum anderen muss das Radiaxlager aber auch die Antriebswelle drehbar lagern, weswegen das Radiaxlager als Radiallager wirken muss. Das Radiaxlager kombiniert also die technischen Funktionen eines Radiallagers und eines Axiallagers. Hierbei ist zu erwähnen, dass das Radiaxlager nicht notwendigerweise als einzelnes Bauteil integriert sein muss. Es besteht alternativ auch die Möglichkeit, das Radiaxlager durch die Kombination eines Radiallagers mit einem Axiallager zu realisieren.

In dem bevorzugten Ausführungsbeispiel der Erfindung weist der Linearantrieb einen Aktor auf, der eine Stellbewegung erzeugt, insbesondere eine lineare Stellbewegung. Darüber hinaus umfasst der Linearantrieb vorzugsweise einen Hebel, der vorzugsweise als zweiseitiger Hebel ausgebildet ist, wobei der Hebel um eine Schwenkachse schwenkbar ist und die Stellbewegung des Aktors in eine entsprechende Axialbewegung des Radiaxlagers und damit auch der Antriebswelle umwandelt. Der Aktor schwenkt also den Hebel um die Schwenkachse und der Hebel wirkt wiederum auf das Radiaxlager und verschiebt die Antriebswelle entsprechend der Stellbewegung des Aktors. Hierbei ist zu erwähnen, dass die Schwenkachse des Hebels vorzugsweise rechtwinklig zur Drehachse der Antriebswelle ausgerichtet ist. Beispielsweise kann die Schwenkachse des Hebels im Wesentlichen senkrecht verlaufen.

Die mechanische Kopplung zwischen dem Hebel einerseits und dem Radiaxlager andererseits erfolgt vorzugsweise dadurch, dass der Hebel an einem Ende zwei Zinken aufweist, die das Radiaxlager umgreifen, so dass eine Schwenkbewegung des Hebels um die Schwenkachse zu einer entsprechenden axialen Verschiebung der Antriebswelle führt.

Der Hebel ermöglicht auch eine Kraftübersetzung von dem Aktor auf die Antriebswelle. Bei einer technischen Realisierung des Hebels als zweiseitiger Hebel weist der Hebel deshalb vorzugsweise unterschiedlich lange Hebelarme auf. Dabei ist der Hebelarm auf der Seite des Aktors vorzugsweise wesentlich länger als der Hebelarm auf der Seite des Radiaxlagers. Auf diese Weise ermöglicht der zweiseitige Hebel eine Kraftübersetzung mit einem bestimmten Übersetzungsverhältnis, wobei das Übersetzungsverhältnis beispielsweise größer sein kann als 2:1, 3:1 oder 4:1. Eine entsprechende Kraftübersetzung lässt sich auch bei einem einseitigen Hebel realisieren, indem der Angriffspunkt für den Aktor weiter entfernt von der Schwenkachse ist als der Angriffspunkt für das Radiaxlager. Auch bei einem einseitigen Hebel lassen sich mit entsprechend unterschiedlich langen Hebelarmen zwischen Schwenkachse und Angriffspunkt die vorstehend erwähnten Kraftübersetzungsverhältnisse realisieren.

Weiterhin ist zu erwähnen, dass die erfindungsgemäße landwirtschaftliche Maschine vorzugsweise auch einen Rotationsantrieb aufweist, um die Antriebswelle zu drehen, wobei der Rotationsantrieb beispielsweise einen Elektromotor und/oder ein Zahnradgetriebe aufweisen kann, um ein Drehmoment von dem Rotationsantrieb auf die Antriebswelle zu übertragen.

In dem bevorzugten Ausführungsbeispiel der Erfindung sind der Linearantrieb einerseits und der Rotationsantrieb andererseits an gegenüberliegenden Enden der Antriebswelle angeordnet, was technisch vorteilhaft ist.

Zu der Anordnung des Linearantriebs und des Rotationsantriebs ist weiterhin zu erwähnen, dass der Linearantrieb und/oder der Rotationsantrieb bezüglich einer Zugrichtung der landwirtschaftlichen Maschine vorzugweise auf derselben Seite der Dosierer angeordnet sind, beispielsweise hinter den Dosierern.

Es wurde bereits vorstehend kurz erwähnt, dass die Dosierer vorzugsweise in einer Dosiererreihe nebeneinander angeordnet sind. Hierbei besteht die Möglichkeit einer sogenannten Halbseitenabschaltung, wenn zwei Dosiererreihen vorgesehen sind, die entlang einer Linie verlaufen und jeweils mehrere Dosierer aufweisen, wobei die beiden benachbarten Dosiererreihen unabhängig voneinander einschaltbar und ausschaltbar sind. Hierbei ist es vorteilhaft, wenn zum Antrieb der beiden Dosiererreihen zwei koaxiale Antriebswellen vorgesehen sind, wobei jede der beiden Antriebswellen jeweils eine der beiden Dosiererreihen antreibt. Für jede der beiden Dosiererreihen ist dann jeweils ein Rotationsantrieb vorgesehen, wobei die beiden Rotationsantriebe vorzugsweise jeweils außen angeordnet sind und auf die äußeren Enden der beiden Antriebswellen wirken. Zur Verschiebung der beiden koaxialen Antriebswellen kann dagegen ein gemeinsamer Linearantrieb vorgesehen sein, der auf beide Antriebswellen wirkt, wobei der Linearantrieb mittig angeordnet ist und auf die mittig liegenden Enden der beiden Antriebswellen wirkt. Dies ist vorteilhaft, weil dadurch auf einen separaten Linearantrieb für die zweite Dosiererreihe verzichtet werden kann.

In dem bevorzugten Ausführungsbeispiel ist eine Kupplung vorgesehen, die den Rotationsantrieb drehstarr, aber axial beweglich mit der Antriebswelle verbindet. Die drehstarre Verbindung des Rotationsantriebs mit der Antriebswelle ist erforderlich, damit der Rotationsantrieb ein Drehmoment auf die Antriebswelle übertragen kann. Die axial bewegliche Verbindung zwischen dem Rotationsantrieb und der Antriebswelle ist dagegen erforderlich, damit die Antriebswelle zur Umstellung zwischen den verschiedenen Betriebsarten (z.B. Fahrgassenbetrieb und Normalbetrieb) axial verschoben werden kann.

In dem bevorzugten Ausführungsbeispiel der Erfindung ist diese Kupplung eine Keilwellenverbindung mit einer Keilwelle und einer Keilnabe, wobei die Keilwelle und die Keilnabe drehstarr ineinandergreifen und relativ zueinander axial verschiebbar sind. Vorzugsweise ist die Keilwelle hierbei kinematisch auf der Seite des Rotationsantriebs angeordnet und wird von dem Rotationsantrieb angetrieben, während die Keilnabe kinematisch auf der Seite der Antriebswelle angeordnet ist und fest mit der Antriebswelle verbunden ist, beispielsweise durch eine Splint- oder Bolzenverbindung. Es ist jedoch alternativ auch möglich, dass die Keilwelle auf der Seite der Antriebswelle angeordnet ist, während die Keilnabe habe auf der Seite des Rotationsantriebs angeordnet ist.

Es wurde bereits vorstehend erwähnt, dass die Verschiebung der Antriebswelle in axialer Richtung eine Umschaltung zwischen verschiedenen Betriebsarten der landwirtschaftlichen Maschine ermöglicht. Beispielsweise kann es sich bei den verschiedenen Betriebsarten um einen Normalbetrieb und eine Fahrgassenbetrieb handeln. Im Normalbetrieb treibt die Antriebswelle dann sämtliche Dosierer an, so dass alle Dosierer Dosiergut (z.B. Saatgut) abgeben. Im Fahrgassenbetrieb werden dagegen nur solche Dosierer angetrieben, die nicht als Fahrgassendosierer konfiguriert sind, so dass nur die restlichen Normaldosierer angetrieben werden und dann Dosiergut (z.B. Saatgut) abgeben.

Den einzelnen Dosierern ist deshalb vorzugsweise jeweils ein Zahnrad auf der Antriebswelle zugeordnet, wobei die einzelnen Zahnräder jeweils eine Innenverzahnung aufweisen.

Die Antriebswelle für die einzelnen Dosierer weist dagegen vorzugsweise jeweils einen ersten Mitnehmer auf, wobei der erste Mitnehmer drehfest auf der Antriebswelle montiert und axial auf der Antriebswelle fixiert ist. Dieser erste Mitnehmer umgibt die Antriebswelle vorzugsweise hülsenförmig und trägt eine Außenverzahnung, die in die Innenverzahnung des zugehörigen Zahnrads auf der Antriebswelle eingreifen kann, um das Zahnrad mitzunehmen. Die Antriebswelle dreht also das zum Antrieb eines Dosierers dienende Zahnrad dann, wenn die Außenverzahnung des ersten Mitnehmers in die Innenverzahnung des zugehörigen Zahnrads eingreift.

Darüber hinaus weist die Antriebswelle für die einzelnen Dosierer vorzugsweise jeweils einen zweiten Mitnehmer auf, wobei der zweite Mitnehmer im Gegensatz zu dem ersten Mitnehmer axial auf der Antriebswelle verschiebbar und relativ zu der Antriebswelle drehbar ist. Allerdings trägt auch der zweite Mitnehmer eine Außenverzahnung, die in die Innenverzahnung des zugehörigen Zahnrads auf der Antriebswelle eingreifen kann, um das Zahnrad mitzunehmen. Der vorzugsweise hülsenförmig geformte zweite Mitnehmer kann also das Zahnrad eines einzelnen Dosierers drehen, wenn sich seine Außenverzahnung im Eingriff mit der Innenverzahnung des zugehörigen Zahnrads befindet.

Der erste Mitnehmer und der zweite Mitnehmer weisen vorzugsweise jeweils eine Stirnverzahnung auf, damit der drehfest auf der Antriebswelle montierte erste Mitnehmer den drehbar auf der Antriebswelle montierten zweiten Mitnehmer mitnehmen und drehen kann.

Darüber hinaus trägt die Antriebswelle vorzugsweise mehrere Konfigurationselemente, die den einzelnen Dosierern zugeordnet sind und festlegen, welcher der Dosierer als Fahrgassendosierer konfiguriert ist und welcher der Dosierer ein Normaldosierer ist.

Beispielsweise kann es sich bei den Konfigurationselementen um formschlüssige Verbindungselemente handeln, wie beispielsweise Bolzen, um die Antriebswelle drehstarr mit denjenigen Zahnrädern auf der Antriebswelle zu verbinden, die zum Antrieb der Normaldosierer dienen.

In dem bevorzugten Ausführungsbeispiel der Erfindung handelt es sich jedoch bei den Konfigurationselementen um Distanzstücke, wobei die axiale Position der Distanzstücke entlang der Antriebswelle festlegt, welcher der Dosierer ein Fahrgassendosierer ist. Zur Konfiguration der einzelnen Dosierer als Fahrgassendosierer bzw. als Normaldosierer müssen die einzelnen Konfigurationselemente also jeweils an der passenden Stelle positioniert werden, was ohne großen Aufwand möglich ist.

Bei dem Fahrgassendosierer wird das Distanzstück vorzugsweise zwischen dem ersten Mitnehmer und dem zweiten Mitnehmer angeordnet.

Bei den Normaldosierern werden die Distanzstücke dagegen auf der Antriebswelle vorzugsweise jeweils axial neben dem ersten Mitnehmer und dem zweiten Mitnehmer angeordnet, die unmittelbar aneinander angrenzen und durch Stirnverzahnungen drehfest miteinander verbunden sind.

Jedem der Dosierer sind also auf der Antriebswelle jeweils ein erster Mitnehmer, ein zweiter Mitnehmer und ein Distanzstück zugeordnet. Die axiale Lage des zugehörigen Distanzstücks in Bezug auf den ersten Mitnehmer und den zweiten Mitnehmer bestimmt hierbei, ob der jeweilige Dosierer als Fahrgassendosierer konfiguriert ist oder als Normaldosierer.

Es wurde bereits vorstehend kurz erwähnt, dass die Konfiguration mittels einer geeigneten Platzierung der Distanzstücke einfach möglich ist. Dies ist dadurch einfach möglich, dass die einzelnen Distanzstücke vorzugsweise als Distanzhülsen ausgebildet sind, die einen axial durchgehenden Schlitz haben und deshalb seitlich auf die Antriebswelle aufgeklemmt oder von der Antriebswelle abgenommen werden können, um die Distanzhülsen an einer anderen Axialposition zu positionieren. Hierfür ist es nicht erforderlich, die komplette Antriebswelle zu demontieren. Vielmehr können die Distanzhülsen einfach seitlich abgenommen und aufgeklickt werden, um die gewünschte Konfiguration der Fahrgassendosierer und der Normaldosierer vorzunehmen. Diese Umkonfiguration ist vorzugsweise ohne Werkzeug und manuell möglich.

In dem bevorzugten Ausführungsbeispiel der Erfindung sind die Distanzhülsen elastisch federnd, damit die Distanzhülsen auf der Antriebswelle festgeklemmt werden können und trotzdem von der Antriebswelle abgenommen werden können.

Der axial durchgehende Schlitz weist vorzugsweise in Umfangsrichtung der Distanzhülse eine Breite auf, die kleiner ist als der Außendurchmesser der Antriebswelle. Dies ist sinnvoll, damit die Distanzhülsen nicht von alleine von der Antriebswelle abfallen können.

Darüber hinaus ist zu erwähnen, dass die einzelnen Distanzstücke außen in ihrer Mantelfläche vorzugsweise keine Verzahnung aufweisen und die Zahnräder auf der Antriebswelle deshalb auch nicht mitnehmen, wenn sich die Distanzstücke axial in Deckung mit den Zahnrädern auf der Antriebswelle befinden. Im Fahrgassenbetrieb eines Dosierers befindet sich die zugehörige Distanzhülse also axial in Deckung mit dem zugehörigen Zahnrad auf der Antriebswelle, so dass dieses Zahnrad aufgrund der fehlenden Außenverzahnung der Distanzhülse nicht angetrieben wird.

In der Grundstellung der Antriebswelle befinden sich dann alle Distanzhülsen in axialer Richtung zu den Zahnrädern auf der Antriebswelle versetzt, so dass die ersten Mitnehmer mit ihrer Außenverzahnung in die Innenverzahnung der Zahnräder auf der Antriebswelle angreifen. In der Grundstellung der Antriebswelle werden dann auch sämtliche Dosierer angetrieben, d.h. sowohl die Normaldosierer als auch die Fahrgassendosierer.

In der Fahrgassenstellung der Antriebswelle befindet sich dagegen die Distanzhülse, die dem Fahrgassendosierer zu geordnet ist, innerhalb der Innenverzahnung des zugehörigen Zahnrads auf der Antriebswelle, so dass dieses Zahnrad von der Antriebswelle nicht mitgenommen wird. Im Ergebnis wird der Fahrgassendosierer deshalb nicht angetrieben und gibt dann auch kein Dosiergut ab.

Bei dem bevorzugten Ausführungsbeispiel der Erfindung weist die landwirtschaftliche Maschine auch eine elektronische Steuereinrichtung auf, um den Linearantrieb zur Verschiebung der Antriebswelle zu steuern. Diese Steuerung erfolgt vorzugsweise programmgesteuert entsprechend einer Fahrgassenschaltung oder entsprechend einem vorgegebenen Fahrgassenrhythmus, so dass die Antriebswelle in einer zeitlichen Abfolge entsprechend dem vorgegebenen Fahrgassenrhythmus entweder die Fahrgassenstellung oder die Grundstellung einnimmt.

Darüber hinaus kann die erfindungsgemäße landwirtschaftliche Maschine ein Positionsbestimmungssystem aufweisen, um die Position der landwirtschaftlichen Maschine zu ermitteln, wobei die Steuereinrichtung den Linearantrieb und/oder den Rotationsantrieb dann in Abhängigkeit von der ermittelten Position der landwirtschaftlichen Maschine ansteuert. Beispielsweise kann das Positionsbestimmungssystem satellitengestützt arbeiten, wie es beispielsweise von den bekannten GPS (Global Positioning System) bekannt ist. Die Betriebsart (z.B. Fahrgassenbetrieb oder Normalbetrieb) der landwirtschaftlichen Maschine kann dadurch in Abhängigkeit von der Position auf einem Feld gesteuert werden.

Ferner kann die landwirtschaftliche Maschine einen Applikationskartenspeicher aufweisen, wobei der Applikationskartenspeicher eine gespeicherte Applikationskarte enthält. Beispielsweise kann die Applikationskarte ein Feld wiedergeben und für verschiedene Positionen auf dem Feld Vorgaben hinsichtlich der Betriebsweise der landwirtschaftlichen Maschine machen. Die Steuereinrichtung kann dann die gespeicherte Applikationskarte auslesen und den Linearantrieb und/oder den Rotationsantrieb in Abhängigkeit von der aktuellen Position der landwirtschaftlichen Maschine einerseits und in Abhängigkeit von der gespeicherten Applikationskarte andererseits ansteuern.

Allgemein ist zu erwähnen, dass die Dosierer vorzugsweise in einer Dosiererreihe nebeneinander angeordnet ist, wobei die Dosiererreihe vorzugweise im Wesentlichen horizontal verläuft, beispielsweise rechtwinklig zur Zugrichtung der landwirtschaftlichen Maschine. Ferner ist zu erwähnen, dass die Dosierer entlang der Dosiererreihe vorzugsweise im Wesentlichen äquidistant angeordnet sind. Die Anzahl der Dosierer ist vorzugsweise größer als eins, zwei, drei, vier, sechs oder acht. Schließlich ist noch zu erwähnen, dass die Antriebswelle vorzugsweise in mehreren Lagerschalen drehbar gelagert ist, insbesondere an jedem der Zahnräder auf der Antriebswelle.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert.

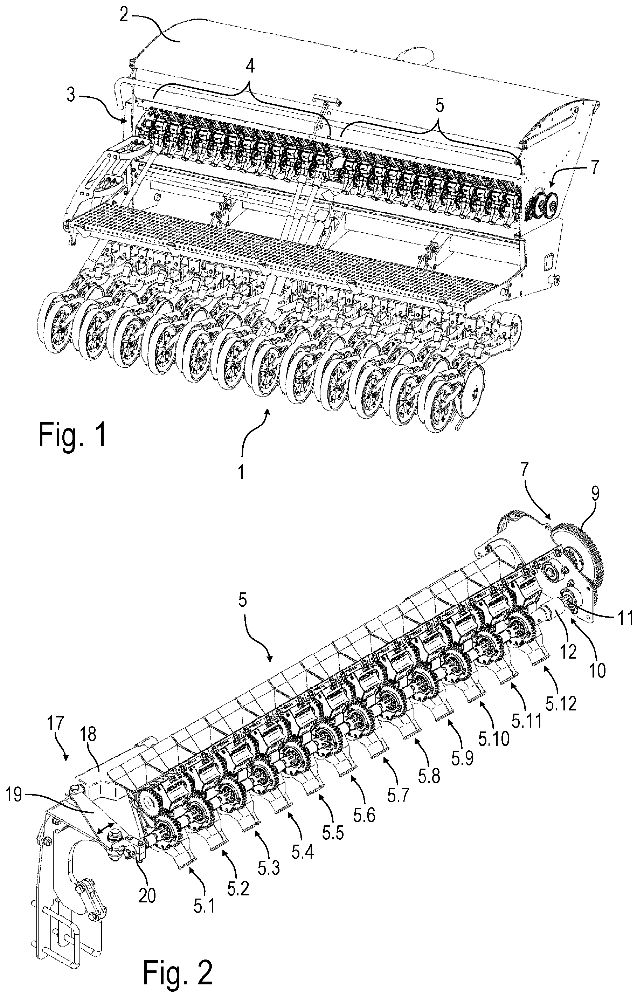

Figur 1 zeigt eine Perspektivansicht einer erfindungsgemäßen Drillmaschine.
Figur 2 zeigt eine Perspektivansicht einer Dosiereinrichtung der Drillmaschine aus Figur 1.

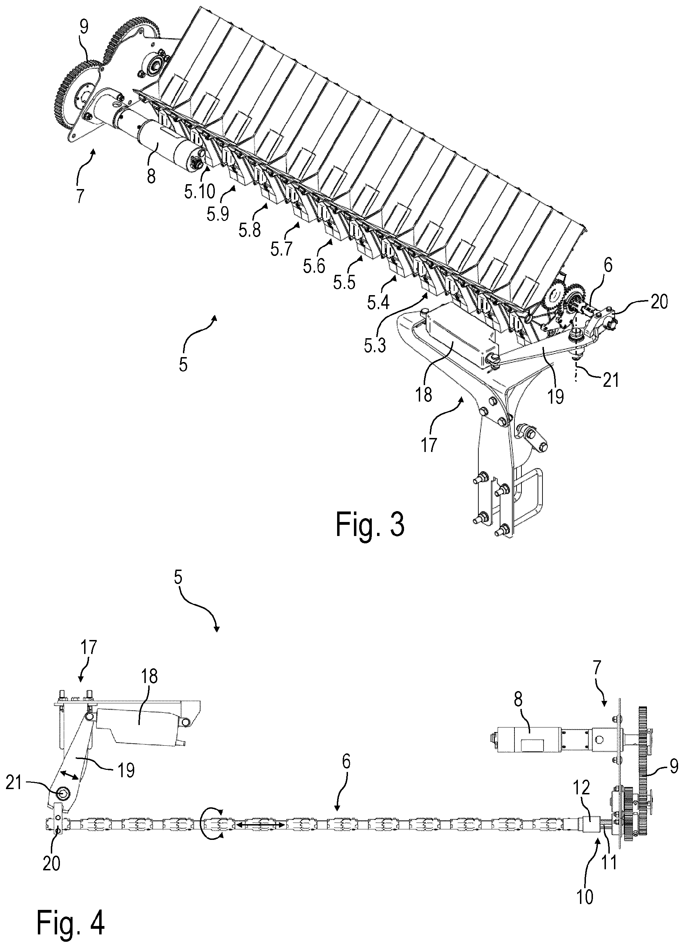

Figur 3 zeigt eine andere Perspektivansicht der Dosiereinrichtung gemäß Figur 2.
Figur 4 zeigt eine Aufsicht auf die Dosiereinrichtung gemäß den Figuren 2 und 3.
Figur 5A zeigt eine Perspektivansicht der Antriebswelle bei einem Normaldosierer.
Figur 5B zeigt eine Perspektivansicht der Antriebswelle bei einem Fahrgassendosierer im Fahrgassenbetrieb.

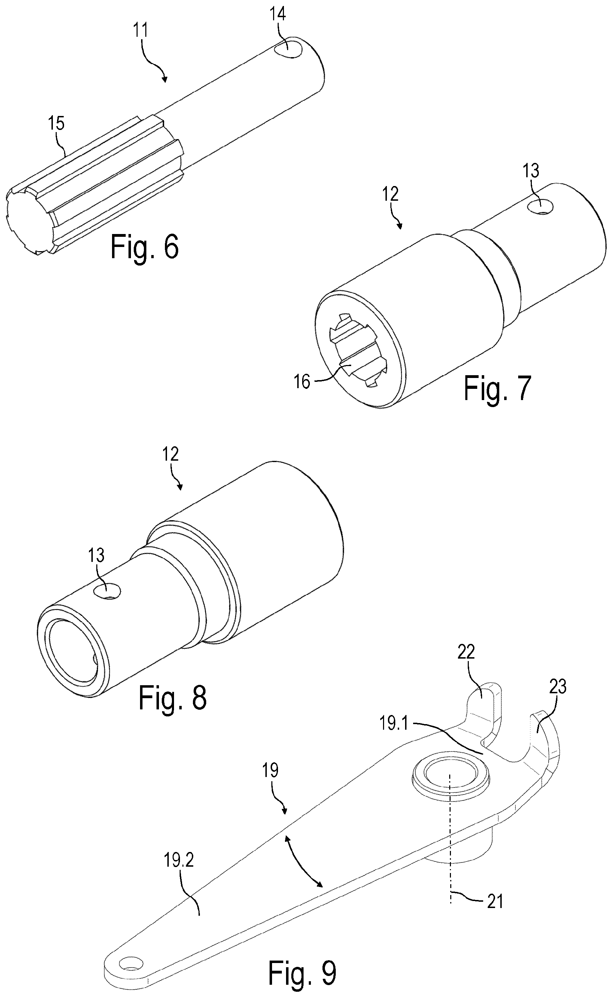

Figur 6 zeigt eine Keilwelle zur Verbindung des Rotationsantriebs mit der Antriebswelle.
Figur 7 zeigt eine Perspektivansicht einer Keilnabe, die mit der Keilwelle gemäß Figur 6 zusammenwirkt.
Figur 8 zeigt eine andere Perspektivansicht der Keilnabe aus Figur 7.
Figur 9 zeigt eine Perspektivansicht eines Hebels zur Kraftübertragung von einem Aktor auf die Antriebswelle.
Figur 10 zeigt eine schematische Darstellung der Steuerung der Drillmaschine.

Die Zeichnungen zeigen ein bevorzugtes Ausführungsbeispiel einer erfindungsgemäßen Drillmaschine 1, wobei derartige Drillmaschinen an sich aus dem Stand der Technik bekannt sind und beispielsweise in EP 2 832 203 A1 beschrieben sind. Hinsichtlich des grundsätzlichen Aufbaus und der Funktionsweise der Drillmaschine 1 wird deshalb zur Vermeidung von Wiederholungen auf die vorstehend zitierte Patentveröffentlichung verwiesen.

An dieser Stelle ist lediglich zu erwähnen, dass die Drillmaschine 1 einen Vorratsbehälter 2 aufweist sowie eine Dosiereinrichtung 3, die Saatgut aus dem Vorratsbehälter 2 dosiert, wie es an sich aus dem Stand der Technik bekannt ist. Die Dosiereinrichtung 3 weist zwei nebeneinanderliegende Dosiererreihen 4, 5 auf, die getrennt antreibbar sind, was eine Halbseitenabschaltung ermöglicht, wie es an sich auch aus dem Stand der Technik bekannt ist. Nachfolgend wird der Aufbau und die Funktionsweise der Dosiererreihe 5 beschrieben. Die Dosiererreihe 4 ist jedoch spiegelbildlich entsprechend aufgebaut und funktioniert grundsätzlich in gleicher Weise.

Die Dosiererreihe 5 umfasst zahlreiche Dosierer 5.1-5.12, die in einer Reihe äquidistant nebeneinander angeordnet sind.

Zum Antrieb der Dosierer 5.1-5.12 dient eine Antriebswelle 6, die drehbar und axial verschiebbar ist, wie noch detailliert beschrieben wird.

Zur Drehung der Antriebswelle 6 dient ein Rotationsantrieb 7 mit einem Elektromotor 8, einem Zahnradgetriebe 9 und einer Keilwellenverbindung 10 zwischen dem Zahnradgetriebe 9 und der Antriebswelle 6.

Die Keilwellenverbindung 10 besteht im Wesentlichen aus einer Keilwelle 11 und einer Keilnabe 12, wobei die Keilnabe 12 kinematisch auf der Seite der Antriebswelle 6 angeordnet und drehstarr mit der Antriebswelle 6 verbunden. Hierzu weist die Keilnabe 12 eine Radialbohrung 13 auf, in die ein Bolzen zur drehstarren Verbindung mit der Antriebswelle 6 gesteckt werden kann.

Die Keilwelle 11 ist dagegen kinematisch auf der Seite des Zahnradgetriebes 9 angeordnet und drehstarr mit dem abtriebsseitigen Zahnrad des Zahnradgetriebes 9 verbunden. Hierzu weist die Keilwelle 11 ebenfalls eine Radialbohrung 14 auf, wobei in die Radialbohrung 14 ein Bolzen zur drehstarren Verbindung mit dem Rotationsantrieb 7 gesteckt werden kann.

Die Keilwellenverbindung 10 ermöglicht zum einen eine Drehmomentübertragung von dem Rotationsantrieb 7 auf die Antriebswelle 6. Zum anderen ermöglicht die Keilwellenverbindung 10 aber auch eine Axialverschiebung der Keilnabe 12 relativ zu der Keilwelle 11, so dass auch die Antriebswelle 6 axial verschiebbar ist.

Zur Drehmomentübertragung von der Keilwelle 11 auf die Keilnabe 12 und damit auf die Antriebswelle 6 weist die Keilwelle 12 in ihrer Mantelfläche keilförmige Mitnehmer 15 auf, die in entsprechende Vertiefungen 16 in der inneren Mantelfläche der Keilnabe 12 eingreifen und dadurch eine formschlüssige drehstarre Verbindung herstellen.

Zur axialen Verschiebung der Antriebswelle 6 ist ein Linearantrieb 17 vorgesehen, der einen Aktor 18, einen Hebel 19 und ein Radiaxlager 20 umfasst. Der Hebel 19 ist hierbei um eine im wesentlichen senkrechte Schwenkachse 21 schwenkbar und wandelt eine im wesentlichen lineare Stellbewegung des Aktors 18 in eine Axialbewegung der Antriebswelle 6 um.

Hierbei ist zu erwähnen, dass das Radiaxlager 20 die Antriebswelle 6 drehbar lagert, aber eine axiale Krafteinleitung in die Antriebswelle 6 ermöglicht, um die Antriebswelle 6 axial zu verschieben. Beispielsweise kann das Radiaxlager 20 aus einer Kombination aus einem Radiallager und einem Axiallager bestehen.

Weiterhin ist zu erwähnen, dass der Hebel 19 unterschiedlich lange Hebelarme 19.1, 19.2 aufweist, um eine Kraftübersetzung zu ermöglichen. Der kürzere Hebelarm 19.1 greift hierbei in das Radiaxlager 20 ein, wie nachstehend noch detailliert beschrieben wird. Der längere Hebelarm 19.2 wird dagegen an seinem Ende von dem Aktor 18 geschwenkt. Aufgrund der unterschiedlich langen Hebelarme 19.1, 19.2 ermöglicht der Linearantrieb 17 ein Kraftübersetzungsverhältnis von mehr als 4:1 von dem Aktor 18 auf die Antriebswelle 6.

Die Kraftübertragung von dem Hebelarm 19.1 auf das Radiaxlager 20 erfolgt mittels zweier Zinken 22, 23, die am Ende des kürzeren Hebelarms 19.1 ausgebildet sind und das Radiaxlager 20 umgreifen.

Die Antriebswelle 6 kann also von dem Aktor 18 axial verschoben werden, während der Rotationsantrieb 7 die Antriebswelle 6 drehen kann.

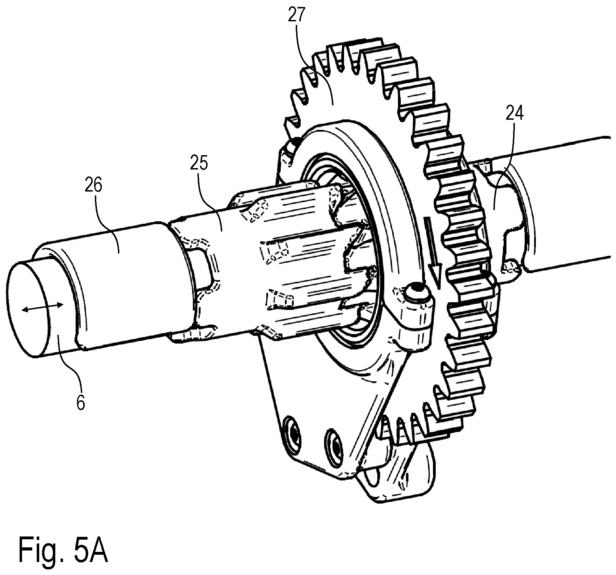

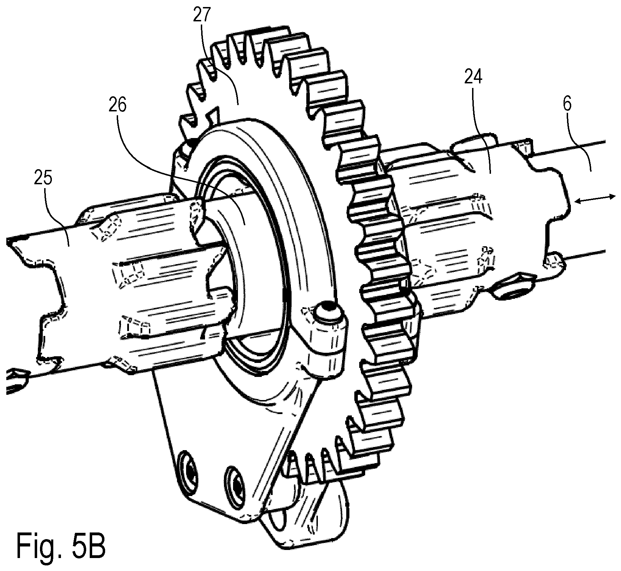

Jedem der Dosierer 5.1-5.12 sind hierbei auf der Antriebswelle 6 ein erster Mitnehmer 24, ein zweiter Mitnehmer 25 und eine Distanzhülse 26 zugeordnet, wie insbesondere aus den Figuren 5A und 5B ersichtlich ist. Der Mitnehmer 24 ist hierbei fest auf der Antriebswelle 6 montiert, d.h. der Mitnehmer 24 ist drehstarr mit der Antriebswelle 6 verbunden und axial nicht verschiebbar. Der Mitnehmer 25 ist dagegen auf der Antriebswelle 6 axial verschiebbar und auch drehbar.

Weiterhin ist jedem der Dosierer 5.1-5.12 ein Zahnrad 27 auf der Antriebswelle 6 zugeordnet, wobei das Zahnrad 27 eine Innenverzahnung trägt, in die eine entsprechende Außenverzahnung des ersten Mitnehmers 24 oder des zweiten Mitnehmers 25 eingreifen kann, um den zugehörigen Dosierer anzutreiben.

Figur 5A zeigt eine Konfiguration eines Normaldosierers, der unabhängig von der axialen Stellung der Antriebswelle 6 angetrieben wird. In dem dargestellten Normalbetrieb greift dann die Außenverzahnung des ersten Mitnehmers 24 in die Innenverzahnung des Zahnrads 27 ein und dreht dadurch das Zahnrad 27, so dass der zugehörigen Dosierer angetrieben wird. In dem Fahrgassenbetrieb würde die Antriebswelle 6 dagegen in axialer Richtung in der Zeichnung nach rechts verschoben werden, so dass dann der zweite Mitnehmer 25 mit seiner Außenverzahnung in die Innenverzahnung des Zahnrads 27 eingreifen würde.

Figur 5B zeigt dagegen die gleiche Perspektivansicht bei einem Fahrgassendosierer im Fahrgassenbetrieb. Hierbei ist die Distanzhülse 26 zwischen dem ersten Mitnehmer 24 und dem zweiten Mitnehmer 22 angeordnet. Bei der in Figur 5B dargestellten Axialposition der Antriebswelle 6 befindet sich dann die Distanzhülse 26 in Deckung mit dem Zahnrad 27, so dass das Zahnrad 27 nicht angetrieben wird, weil die Distanzhülse 26 keine Außenverzahnung aufweist. Dies hat zur Folge, dass der zugehörige Fahrgassendosierer dann auch nicht angetrieben wird.

Im Ergebnis kann der Linearantrieb 17 also zwischen einem Fahrgassenbetrieb und ein Normalbetrieb umschalten, indem die Antriebswelle 6 in axialer Richtung entsprechend verschoben wird.

Darüber hinaus können die einzelnen Dosierer 5.1-5.12 wahlweise als Fahrgassendosierer oder als Normaldosierer konfiguriert werden, indem die Distanzhülse 26 in Bezug auf den ersten Mitnehmer 24 und den zweiten Mitnehmer 24 an geeigneter Stelle platziert wird.

Zur Konfiguration eines der Dosierer 5.1-5.12 als Normaldosierer wird die zugehörige Distanzhülse 26 neben dem ersten Mitnehmer 24 und zweiten Mitnehmer 25 positioniert, die durch eine Stirnverzahnung ineinandergreifen, wie es in Figur 5A dargestellt ist.

Zur Konfiguration eines der Dosierer 5.1-5.12 als Fahrgassendosierer wird die zugehörige Distanzhülse 26 dagegen zwischen dem ersten Mitnehmer 24 und dem zweiten Mitnehmer 25 positioniert, wie es in Figur 5B dargestellt ist.

Ferner ist zu erwähnen, dass die beiden Dosierreihen 4, 5 jeweils einen eigenen Rotationsantrieb 7 aufweisen, wobei die Zeichnungen nur den Rotationsantrieb 7 der Dosierreihe 5 zeigen, wohingegen der Rotationsantrieb für die Dosiererreihe 4 nicht sichtbar ist. Die beiden Rotationsantriebe 7 für die beiden Dosiererreihen sind getrennt steuerbar, um eine Halbseitenabschaltung zu ermöglichen, d.h. es ist beispielsweise möglich, nur die Dosierreihe 5 anzutreiben, während die Dosierreihe 4 stillgesetzt ist.

Hierbei kann der Linearantrieb 17 auf beide Dosierreihe 4, 5 wirken, so dass auf einen zweiten Linearantrieb verzichtet werden kann. Die Rotationsantriebe 7 sind deshalb außen angeordnet, während der Linearantrieb 17 mittig angeordnet ist.

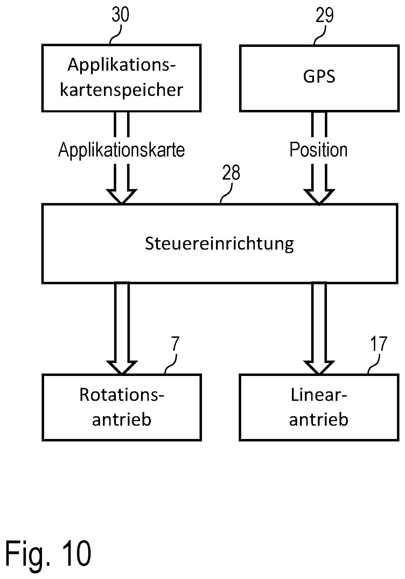

Figur 10 zeigt eine schematische Darstellung zur Veranschaulichung der Steuerung der erfindungsgemäßen Drillmaschine 1.

Hierfür weist die Drillmaschine 1 eine Steuereinrichtung 28 auf, die sowohl den Rotationsantrieb 7 als auf den Linearantrieb 17 ansteuert.

Eingangsseitig ist die Steuereinrichtung 28 mit einem satellitengesteuerten Positionsbestimmungssystem 29 verbunden, wobei das Positionsbestimmungssystem 29 die Position der Drillmaschine 1 auf dem Feld an die Steuereinrichtung 28 meldet.

Darüber hinaus ist die Steuereinrichtung 28 eingangsseitig mit einem Applikationskartenspeicher 30 verbunden, der in herkömmlicher Weise eine gespeicherte Applikationskarte enthält. Die Applikationskarte gibt positionsabhängig Vorgaben für die Betriebsweise der Drillmaschine 1 und meldet diese an die Steuereinrichtung 28.

Die Steuereinrichtung 28 steuert dann den Rotationsantrieb 7 und den Linearantrieb 17 in Abhängigkeit von der aktuellen Position der Drillmaschine1 einerseits und in Abhängigkeit von der gespeicherten Applikationskarte andererseits an.

Die Erfindung ist nicht auf das vorstehende beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen. Die Erfindung wird durch den Umfang der beigefügten Ansprüche definiert.

### Bezugszeichenliste:

- 1: Drillmaschine
- 2: Vorratsbehälter
- 3: Dosiereinrichtung
- 4, 5: Dosiererreihen
- 5.1-5.12: Dosierer
- 6: Antriebswelle
- 7: Rotationsantrieb zum Drehen der Antriebswelle
- 8: Elektromotor
- 9: Zahnradgetriebe
- 10: Keilwellenverbindung
- 11: Keilwelle der Keilwellenverbindung
- 12: Keilnabe der Keilwellenverbindung
- 13: Radialbohrung in der Keilnabe zur Verbindung mit der Antriebswelle
- 14: Radialbohrung in der Keilwelle zur Verbindung mit dem Zahnradgetriebe
- 15: Mitnehmer der Keilwelle
- 16: Vertiefungen der Keilnabe
- 17: Linearantrieb zum Verschieben der Antriebswelle
- 18: Aktor
- 19: Hebel
- 19.1, 19.2: Hebelarme
- 20: Radiaxlager
- 21: Schwenkachse des Hebels
- 22, 23: Zinken des Hebels zum Umgreifen des Radiaxlagers
- 24: Mitnehmer auf der Antriebswelle (fest montiert)
- 25: Mitnehmer auf der Antriebswelle (drehbar und axial verschiebbar)
- 26: Distanzhülse
- 27: Zahnrad zum Antrieb eines Dosierers
- 28: Steuereinrichtung
- 29: Positionsbestimmungssystem
- 30: Applikationskartenspeicher

## Patentansprüche

1. Landwirtschaftliche Maschine (1), insbesondere Drillmaschine (1), mit
a) einer drehbar gelagerten Antriebswelle (6) zum mechanischen Antrieb der Maschine (1), nämlich zum gemeinsamen Antrieb von mehreren Dosierern (5.1-5.12) der landwirtschaftlichen Maschine (1),
wobei die Antriebswelle (6) axial verschiebbar ist, um in Abhängigkeit von der axialen Stellung der Antriebswelle (6) eine von mehreren Betriebsarten der Maschine (1) einzustellen, **dadurch gekennzeichnet, dass** die Betriebsarten ein Fahrgassenbetrieb und ein Normalbetrieb sind.

2. Landwirtschaftliche Maschine (1) nach Anspruch 1, **dadurch gekennzeichnet**
a) **dass** zum axialen Verschieben der Antriebswelle (6) ein Linearantrieb (17) vorgesehen ist,
b) **dass** der Linearantrieb (17) vorzugsweise pneumatisch, hydraulisch oder elektrisch arbeitet, insbesondere elektromotorisch.

3. Landwirtschaftliche Maschine (1) nach Anspruch 2,
**dadurch gekennzeichnet,**
a) **dass** die Antriebswelle (6) in einem Radiaxlager (20) gelagert ist, wobei die Antriebswelle (6) in dem Radiaxlager (20) drehbar ist, wohingegen die Antriebswelle (6) in dem Radiaxlager (20) nicht axial verschiebbar ist, und
b) **dass** der Linearantrieb (17) auf das Radiaxlager (20) wirkt und das Radiaxlager (20) zusammen mit der Antriebswelle (6) axial verschiebt.

4. Landwirtschaftliche Maschine (1) nach Anspruch 3, **dadurch gekennzeichnet,**
a) **dass** der Linearantrieb (17) einen Aktor (18) aufweist, der eine Stellbewegung erzeugt, insbesondere eine lineare Stellbewegung, und
b) **dass** der Linearantrieb (17) einen Hebel (19) aufweist, insbesondere einen zweiseitigen Hebel (19), wobei der Hebel (19) um eine Schwenkachse (21) schwenkbar ist und die Stellbewegung des Aktors (18) in eine entsprechende Axialbewegung des Radiaxlagers (20) und damit auch der Antriebswelle (6) umwandelt,
c) wobei die Schwenkachse (21) des Hebels (19) vorzugsweise rechtwinklig zur Drehachse der Antriebswelle (6) ausgerichtet ist.

5. Landwirtschaftliche Maschine (1) nach Anspruch 4, **dadurch gekennzeichnet, dass** der Hebel (19) an einem Ende zwei Zinken (22, 23) aufweist, die das Radiaxlager (20) umgreifen, so dass eine Schwenkbewegung des Hebels (19) um die Schwenkachse (21) zu einer entsprechenden Verschiebung der Antriebswelle (6) führt.

6. Landwirtschaftliche Maschine (1) nach Anspruch 4 oder 5, **dadurch gekennzeichnet,**
a) **dass** der Hebel (19) unterschiedlich lange Hebelarme (19.1, 19.2) aufweist, um eine Kraftübersetzung mit einem bestimmten Kraftübersetzungsverhältnis zu bewirken mit einer geringeren Kraft durch den Aktor (18) und einer größeren Kraft auf die Antriebswelle (6),
b) **dass** das Kraftübersetzungsverhältnis vorzugsweise größer ist als 2:1, 3:1 oder 4:1.

7. Landwirtschaftliche Maschine (1) nach einem der vorhergehenden Ansprüche, **gekennzeichnet durch** einen Rotationsantrieb (7) zum Drehen der Antriebswelle (6), insbesondere mit einem Elektromotor (8) und/oder einem Zahnradgetriebe (9).

8. Landwirtschaftliche Maschine (1) nach Anspruch 7 und einem der Ansprüche 2-6,
**dadurch gekennzeichnet,**
a) **dass** der Linearantrieb (17) einerseits und der Rotationsantrieb (7) andererseits an gegenüberliegenden Enden der Antriebswelle (6) angreifen, und/oder
b) **dass** der Linearantrieb (17) und der Rotationsantrieb (7) bezüglich einer Zugrichtung der landwirtschaftlichen Maschine (1) auf derselben Seite der Dosierer (5.1-5.12) angeordnet sind, insbesondere hinter den Dosierern (5.1-5.12).

9. Landwirtschaftliche Maschine (1) nach einem der vorhergehenden Ansprüche,
**dadurch gekennzeichnet,**
a) **dass** die landwirtschaftliche Maschine (1) zwei Dosiererreihen (4, 5) aufweist, die nebeneinander angeordnet sind, entlang einer Linie verlaufen und jeweils mehrere Dosierer (5.1-5.12) aufweisen, wobei die beiden Dosiererreihen (4, 5) vorzugsweise unabhängig voneinander einschaltbar und ausschaltbar sind,
b) **dass** die landwirtschaftliche Maschine (1) zum Antrieb der beiden Dosiererreihen (4, 5) zwei koaxiale Antriebswellen (6) aufweist, wobei jede der beiden Antriebswellen (6) jeweils eine der beiden Dosierreihen (4, 5) antreibt,
c) **dass** die landwirtschaftliche Maschine (1) zum Antrieb der beiden Antriebswellen (6) zwei Rotationsantriebe (7) aufweist, wobei jeder der beiden Rotationsantriebe (7) jeweils eine der Dosierreihen (4, 5) antreibt,
d) **dass** die beiden Rotationsantriebe (7) jeweils außen angeordnet sind und auf die äußeren Enden der jeweiligen Antriebswelle (6) wirken, und
e) **dass** die landwirtschaftliche Maschine (1) zur gemeinsamen Verschiebung der beiden Antriebswellen einen gemeinsamen Linearantrieb (17) aufweist, der auf die beiden Antriebswellen (6) wirkt, und
f) **dass** der gemeinsamen Linearantrieb (17) mittig angeordnet ist und auf die mittig liegenden Enden der beiden Antriebswellen (6) wirkt.

10. Landwirtschaftliche Maschine (1) nach einem der Ansprüche 7 bis 9, **gekennzeichnet durch** eine Kupplung (10), die den Rotationsantrieb / die Rotationsantriebe (7) drehstarr, aber axial beweglich mit der Antriebswelle (6) verbindet.

11. Landwirtschaftliche Maschine (1) nach Anspruch 10, **dadurch gekennzeichnet,**
a) **dass** die Kupplung (10) eine Keilwellenverbindung (10) aufweist mit einer Keilwelle (11) und Keilnabe (12), wobei die Keilwelle (11) und die Keilnabe (12) drehstarr ineinander greifen und relativ zueinander verschiebbar sind,
b) **dass** vorzugsweise die Keilwelle (11) von dem Rotationsantrieb (7) angetrieben wird, während die Keilnabe (12) drehstarr mit der Antriebswelle (6) verbunden ist.

12. Landwirtschaftliche Maschine (1) nach einem der vorhergehenden Ansprüche,
**dadurch gekennzeichnet,**
a) **dass** die Antriebswelle (6) mehrere Dosierer (5.1-5.12) antreibt,
b) **dass** in einem Fahrgassenbetrieb mindestens einer der Dosierer (5.1-5.12) als Fahrgassendosierer nicht angetrieben wird, damit dieser in einer Fahrgasse auf einem Acker kein Dosiergut abgibt, während die anderen Dosierer (5.1-5.12) als Normaldosierer auch in dem Fahrgassenbetrieb angetrieben werden, um das Dosiergut abzugeben,
c) **dass** in einen Normalbetrieb jeder der Dosierer (5.1-5.12) angetrieben wird, um das Dosiergut abzugeben,
d) **dass** die Antriebswelle (6) axial verschiebbar ist zwischen einer Fahrgassenstellung für den Fahrgassenbetrieb und einer Grundstellung für den Normalbetrieb, und
e) **dass** die Antriebswelle (6) in der Grundstellung alle Dosierer (5.1-5.12) einschließlich dem Fahrgassendosierer antreibt, so dass alle Dosierer (5.1-5.12) das Dosiergut abgeben, und
f) **dass** die Antriebswelle (6) in der Fahrgassenstellung den mindestens einen Fahrgassendosierer nicht antreibt, sondern nur die Normaldosierer.

13. Landwirtschaftliche Maschine (1) nach Anspruch 12, **dadurch gekennzeichnet,**
a) **dass** den einzelnen Dosierern (5.1-5.12) zum Antrieb jeweils ein Zahnrad (27) auf der Antriebswelle (6) zugeordnet ist, wobei die einzelnen Zahnräder (27) jeweils eine Innenverzahnung aufweisen, und/oder
b) **dass** die Antriebswelle (6) für die einzelnen Dosierer (5.1-5.12) jeweils einen ersten Mitnehmer (24) trägt, wobei der erste Mitnehmer (24)
b1) drehfest auf der Antriebswelle (6) montiert ist,
b2) axial auf der Antriebswelle (6) fixiert ist,
b3) eine Außenverzahnung trägt, die in die Innenverzahnung des zugehörigen Zahnrads (27) auf der Antriebswelle (6) eingreifen kann, um das Zahnrad (27) mitzunehmen,
b4) die Antriebswelle (6) vorzugsweise hülsenförmig umgibt, und/oder
c) **dass** die Antriebswelle (6) für die einzelnen Dosierer (5.1-5.12) jeweils einen zweiten Mitnehmer (25) aufweist, wobei der zweite Mitnehmer (25)
c1) axial auf der Antriebswelle (6) verschiebbar ist,
c2) relativ zu der Antriebswelle (6) drehbar ist,
c3) eine Außenverzahnung trägt, die in die Innenverzahnung des zugehörigen Zahnrads (27) auf der Antriebswelle (6) eingreifen kann, um das Zahnrad (27) mitzunehmen, und
c4) die Antriebswelle (6) vorzugsweise hülsenförmig umgibt, und/oder
d) **dass** der erste Mitnehmer (24) und der zweite Mitnehmer (25) jeweils eine Stirnverzahnung aufweisen, damit der drehfest auf der Antriebswelle (6) montierte erste Mitnehmer (24) den drehbar auf der Antriebswelle (6) montierten zweiten Mitnehmer (25) mitnehmen und drehen kann, und/oder
e) **dass** die Antriebswelle (6) mehrere Konfigurationselemente (26) trägt, die den einzelnen Dosierern (5.1-5.12) zugeordnet sind und festlegen, welcher der Dosierer (5.1-5.12) ein Fahrgassendosierer ist, wobei die Konfigurationselemente (26)
e1) Distanzstücke (26) sind, wobei die axiale Position der Distanzstücke (26) entlang der Antriebswelle (6) festlegt, welcher der Dosierer (5.1-5.12) ein Fahrgassendosierer ist, wobei
- ein Distanzstück (26) bei dem Fahrgassendosierer auf der Antriebswelle (6) zwischen dem ersten Mitnehmer (24) und dem zweiten Mitnehmer (25) angeordnet ist, und/oder
- die Distanzstücke (26) bei den Normaldosierern auf der Antriebswelle (6) jeweils axial neben dem ersten Mitnehmer (24) und dem zweiten Mitnehmer (25) angeordnet sind, die unmittelbar aneinander angrenzen und durch Stirnverzahnungen drehfest miteinander verbunden sind und/oder
- die einzelnen Distanzstücke (26) jeweils Distanzhülsen (26) sind, die einen axial durchgehenden Schlitz haben und deshalb seitlich auf die Antriebswelle (6) aufgeklemmt oder von der Antriebswelle (6) abgenommen werden können, um die Distanzhülsen an einer anderen Axialposition zu positionieren, wobei der axial durchgehende Schlitz in Umfangsrichtung der Distanzhülse (26) eine Breite aufweist, die kleiner ist als der Durchmesser der Antriebswelle (6), und/oder
- die Distanzhülsen (26) elastisch federnd sind, damit die Distanzhülsen (26) auf der Antriebswelle (6) festgeklemmt werden können und trotzdem von der Antriebswelle (6) abgenommen werden können, und/oder
- die einzelnen Distanzstücke (26) außen keine Verzahnung aufweisen und die Zahnräder (27) auf der Antriebswelle (6) deshalb auch nicht mitnehmen, wenn sich die Distanzstücke (26) axial in Deckung mit den Zahnrädern auf der Antriebswelle (6) befinden, und/oder
- in der Grundstellung der Antriebswelle (6) alle Distanzhülsen (26) in axialer Richtung zu den Zahnrädern (27) auf der Antriebswelle (6) versetzt sind und die ersten Mitnehmer (24) mit ihrer Außenverzahnung in die Innenverzahnung der Zahnräder (27) auf der Antriebswelle (6) eingreifen, so dass die Antriebswelle (6) in der Grundstellung alle Zahnräder (27) auf der Antriebswelle (6) dreht und auch alle Dosierer (5.1-5.12) antreibt, und/ oder
- in der Fahrgassenstellung der Antriebswelle (6) mindestens eine der Distanzhülsen (26) in axialer Richtung innerhalb der Innenverzahnung eines der Zahnräder (27) auf der Antriebswelle (6) angeordnet ist, so dass dieses Zahnrad (27) von der Antriebswelle (6) nicht mitgenommen wird und auch der zugehörige Fahrgassendosierer kein Dosiergut dosiert und/oder
e2) formschlüssige Verbindungselemente sind, insbesondere Bolzen, um die Antriebswelle (6) mit denjenigen Zahnrädern auf der Antriebswelle (6) drehfest zu verbinden, die zum Antrieb der Normaldosierer dienen.

14. Landwirtschaftliche Maschine (1) nach einem der vorhergehenden Ansprüche,
**dadurch gekennzeichnet,**
a) **dass** die landwirtschaftliche Maschine (1) eine Steuereinrichtung (28) aufweist zur automatischen Ansteuerung des Linearantriebs (17) und/oder des Rotationsantrieb (7), insbesondere
a1) entsprechend einer Fahrgassenschaltung und/oder
a2) entsprechend einem vorgegebenen Fahrgassenrhythmus, so dass die Antriebswelle (6) in einer zeitlichen Abfolge entsprechend dem vorgegebenen Fahrgassenrhythmus entweder die Fahrgassenstellung oder die Grundstellung einnimmt, und/oder
b) **dass** die landwirtschaftliche Maschine (1) ein Positionsbestimmungssystem (29) aufweist, insbesondere ein satellitengestütztes Positionsbestimmungssystem, zur Bestimmung der Position der landwirtschaftlichen Maschine (1), wobei die Steuereinrichtung (28) den Linearantrieb (17) und/oder den Rotationsantrieb (7) in Abhängigkeit von der ermittelten Position der landwirtschaftlichen Maschine (1) ansteuert, und/oder
c) **dass** die landwirtschaftliche Maschine (1) einen Applikationskartenspeicher (30) aufweist,
c1) wobei der Applikationskartenspeicher (30) eine gespeicherte Applikationskarte enthält,
c2) wobei die gespeicherte Applikationskarte die gewünschte Betriebsweise der landwirtschaftlichen Maschine (1) in Abhängigkeit von der Position der landwirtschaftlichen Maschine (1) vorgibt, und
c3) wobei die Steuereinrichtung (28) die gespeicherte Applikationskarte ausliest und den Linearantrieb (17) und/oder den Rotationsantrieb (7) in Abhängigkeit von der aktuellen Position der landwirtschaftlichen Maschine (1) und in Abhängigkeit von der gespeicherten Applikationskarte ansteuert.

15. Landwirtschaftliche Maschine (1) nach einem der vorhergehenden Ansprüche,
**dadurch gekennzeichnet,**
a) **dass** die Dosierer (5.1-5.12) in einer Dosiererreihe (5) nebeneinander angeordnet sind, wobei
- die Dosiererreihe (4, 5) im Wesentlichen horizontal verläuft, und/oder
- die Dosierer (5.1-5.12) entlang der Dosiererreihe (5) im Wesentlichen äquidistant angeordnet sind, und/oder
b) **dass** die Anzahl der Dosierer (5.1-5.12) größer ist als 1, 2, 3, 4, 6 oder 8, und/oder
c) **dass** die Antriebswelle (6) in mehreren Lagerschalen drehbar gelagert ist, insbesondere an jedem der Zahnräder (27) auf der Antriebswelle (6).

## Claims

1. Agricultural machine (1), in particular seed drill (1), having
a) a rotatably mounted drive shaft (6) for mechanically driving the machine (1), namely for jointly driving a plurality of metering devices (5.1-5.12) of the agricultural machine (1),
wherein the drive shaft (6) is axially displaceable in order to set one of a plurality of types of operation of the machine (1) depending on the axial position of the drive shaft (6), **characterized in that** the types of operation are a tramline mode and a normal mode.

2. Agricultural machine (1) according to Claim 1, **characterized**
a) **in that** a linear drive (17) is provided for axially displacing the drive shaft (6);
b) **in that** the linear drive (17) preferably operates pneumatically, hydraulically or electrically, in particular electromotively.

3. Agricultural machine (1) according to Claim 2, **characterized**
a) **in that** the drive shaft (6) is mounted in a radiax bearing (20), wherein the drive shaft (6) is rotatable in the radiax bearing (20), whereas the drive shaft (6) is not axially displaceable in the radiax bearing (20), and
b) **in that** the linear drive (17) acts on the radiax bearing (20) and displaces the radiax bearing (20) axially together with the drive shaft (6).

4. Agricultural machine (1) according to Claim 3, **characterized**
a) **in that** the linear drive (17) has an actuator (18) which generates an actuating movement, in particular a linear actuating movement, and
b) **in that** the linear drive (17) has a lever (19), in particular a two-sided lever (19), wherein the lever (19) is pivotable about a pivot axis (21) and converts the actuating movement of the actuator (18) into a corresponding axial movement of the radiax bearing (20) and thus also of the drive shaft (6),
c) wherein the pivot axis (21) of the lever (19) is preferably oriented at a right angle to the axis of rotation of the drive shaft (6).

5. Agricultural machine (1) according to Claim 4, **characterized in that** one end of the lever (19) has two tines (22, 23), which engage around the radiax bearing (20) such that a pivoting movement of the lever (19) about the pivot axis (21) leads to a corresponding displacement of the drive shaft (6).

6. Agricultural machine (1) according to Claim 4 or 5, **characterized**
a) **in that** the lever (19) has lever arms (19.1, 19.2) of different lengths in order to bring about a power transmission having a certain power transmission ratio with a lower force by means of the actuator (18) and with a greater force on the drive shaft (6),
b) **in that** the power transmission ratio is preferably greater than 2:1, 3:1 or 4:1.

7. Agricultural machine (1) according to any one of the preceding claims, **characterized by** a rotational drive (7) for rotating the drive shaft (6), in particular with an electric motor (8) and/or a gear drive (9).

8. Agricultural machine (1) according to Claim 7 and any one of Claims 2-6, **characterized**
a) **in that** the linear drive (17), on the one hand, and the rotational drive (7), on the other hand, engage at opposite ends of the drive shaft (6), and/or
b) **in that** the linear drive (17) and the rotational drive (7) are arranged on the same side of the metering devices (5.1-5.12) with respect to a towing direction of the agricultural machine (1), in particular behind the metering devices (5.1-5.12).

9. Agricultural machine (1) according to any one of the preceding claims,
**characterized**
a) **in that** the agricultural machine (1) has two metering rows (4, 5), which are arranged next to each other, run along a line and each have a plurality of metering devices (5.1-5.12), the two metering rows (4, 5) being switchable on and switchable off preferably independently of each other,
b) **in that** the agricultural machine (1) has two coaxial drive shafts (6) for driving the two metering rows (4, 5), each of the two drive shafts (6) driving one of the two metering rows (4, 5),
c) **in that** the agricultural machine (1) has two rotational drives (7) for driving the two drive shafts (6), each of the two rotational drives (7) driving one of the metering rows (4, 5),
d) **in that** the two rotational drives (7) are each arranged on the outside and act on the outer ends of the respective drive shaft (6), and
e) **in that**, for jointly displacing the two drive shafts, the agricultural machine (1) has a common linear drive (17) which acts on the two drive shafts (6), and
f) **in that** the common linear drive (17) is arranged centrally and acts on the centrally located ends of the two drive shafts (6).

10. Agricultural machine (1) according to any one of Claims 7 to 9, **characterized by** a coupling (10), which connects the rotational drive / the rotational drives (7) rigidly in terms of rotation but axially movably to the drive shaft (6).

11. Agricultural machine (1) according to Claim 10, **characterized**
a) **in that** the coupling (10) has a splined shaft connection (10) with a splined shaft (11) and splined hub (12), the splined shaft (11) and the splined hub (12) intermeshing rigidly in terms of rotation and being displaceable relative to each other,
b) **in that** the splined shaft (11) is preferably driven by the rotational drive (7), while the splined hub (12) is connected rigidly in terms of rotation to the drive shaft (6).

12. Agricultural machine (1) according to any one of the preceding claims,
**characterized**
a) **in that** the drive shaft (6) drives a plurality of metering devices (5.1-5.12),
b) **in that**, in a tramline mode, at least one of the metering devices (5.1-5.12) is not driven as a tramline metering device so that it does not dispense any material for metering in a tramline in a field, while the other metering devices (5.1-5.12) are also driven as normal metering devices in the tramline mode in order to dispense the material for metering,
c) **in that**, in a normal mode, each of the metering devices (5.1-5.12) is driven in order to dispense the material for metering,
d) **in that** the drive shaft (6) is axially displaceable between a tramline position for the tramline mode and a basic position for the normal mode, and
e) **in that** the drive shaft (6) in the basic position drives all of the metering devices (5.1-5.12), including the tramline metering device, and therefore all of the metering devices (5.1-5.12) dispense the material for metering, and
f) **in that** the drive shaft (6) in the tramline position only drives the normal metering devices rather than the at least one tramline metering device.

13. Agricultural machine (1) according to Claim 12, **characterized**
a) **in that** the individual metering devices (5.1-5.12), for driving, are in each case assigned a gearwheel (27) on the drive shaft (6), the individual gearwheels (27) in each case having an internal toothing, and/or
b) **in that** the drive shaft (6) for the individual metering devices (5.1-5.12) in each case bears a first driver (24), wherein the first driver (24)
b1) is mounted on the drive shaft (6) for rotation therewith,
b2) is fixed axially on the drive shaft (6),
b3) bears an external toothing which can engage in the internal toothing of the associated gearwheel (27) on the drive shaft (6) in order to carry along the gearwheel (27),
b4) surrounds the drive shaft (6) preferably in a sleeve-shaped manner, and/or
c) **in that** the drive shaft (6) for the individual metering devices (5.1-5.12) in each case has a second driver (25), wherein the second driver (25)
c1) is axially displaceable on the drive shaft (6),
c2) is rotatable relative to the drive shaft (6),
c3) bears an external toothing which can engage in the internal toothing of the associated gearwheel (27) on the drive shaft (6) in order to carry along the gearwheel (27), and
c4) surrounds the drive shaft (6) preferably in a sleeve-shaped manner, and/or
d) **in that** the first driver (24) and the second driver (25) each have a spur toothing so that the first driver (24) mounted on the drive shaft (6) for rotation therewith can carry along and rotate the second driver (25) mounted rotatably on the drive shaft (6),
e) **in that** the drive shaft (6) bears a plurality of configuration elements (26) which are assigned to the individual metering devices (5.1-5.12) and determine which of the metering devices (5.1-5.12) is a tramline metering device, wherein
the configuration elements (26)
e1) are spacers (26), wherein the axial position of the spacers (26) along the drive shaft (6) determines which of the metering devices (5.1-5.12) is a tramline metering device, wherein
- a spacer (26) in the tramline metering device is arranged on the drive shaft (6) between the first driver (24) and the second driver (25), and/or
- the spacers (26) in the normal metering devices are each arranged on the drive shaft (6) axially next to the first driver (24) and the second driver (25) which are directly adjacent to one another and are connected to one another for conjoint rotation by spur toothings, and/or
- the individual spacers (26) are each spacer sleeves (26) which have an axially continuous slot and can therefore be clamped laterally onto the drive shaft (6) or can be removed from the drive shaft (6) in order to position the spacer sleeves at a different axial position, wherein the axially continuous slot in the circumferential direction of the spacer sleeve (26) has a width which is smaller than the diameter of the drive shaft (6), and/or
- the spacer sleeves (26) are elastically resilient so that the spacer sleeves (26) can be firmly clamped on the drive shaft (6) and can nevertheless be removed from the drive shaft (6), and/or
- the individual spacers (26) do not have a toothing on the outside and therefore also do not carry along the gearwheels (27) on the drive shaft (6) when the spacers (26) are axially in alignment with the gearwheels on the drive shaft (6), and/or
- in the basic position of the drive shaft (6), all of the spacer sleeves (26) are offset in the axial direction with respect to the gearwheels (27) on the drive shaft (6) and the first drivers (24) engage with their external toothing in the internal toothing of the gearwheels (27) on the drive shaft (6) such that the drive shaft (6) in the basic position rotates all of the gearwheels (27) on the drive shaft (6) and also drives all of the metering devices (5.1-5.12), and/or
- in the tramline position of the drive shaft (6), at least one of the spacer sleeves (26) is arranged in the axial direction within the internal toothing of one of the gearwheels (27) on the drive shaft (6) such that said gearwheel (27) is not carried along by the drive shaft (6) and also the associated tramline metering device does not meter any material for metering, and/or
e2) are form-fitting connecting elements, in particular bolts, in order to connect the drive shaft (6) rigidly in terms of rotation to the those gearwheels of the drive shaft (6) which are used for driving the normal metering devices.

14. Agricultural machine (1) according to any one of the preceding claims,
**characterized**
a) **in that** the agricultural machine (1) has a control device (28) for automatically activating the linear drive (17) and/or the rotational drive (7), in particular
a1) corresponding to a tramline shut-off, and/or
a2) corresponding to a predefined tramline rhythm such that the drive shaft (6) either takes up the tramline position or the basic position in a temporal sequence corresponding to the predefined tramline rhythm, and/or
b) **in that** the agricultural machine (1) has a position-determining system (29), in particular a satellite-assisted position-determining system, for determining the position of the agricultural machine (1), wherein the control device (28) activates the linear drive (17) and/or the rotational drive (7) depending on the identified position of the agricultural machine (1), and/or
c) **in that** the agricultural machine (1) has an application map memory (30),
c1) wherein the application map memory (30) contains a stored application map,
c2) wherein the stored application map predefines the desired operation of the agricultural machine (1) depending on the position of the agricultural machine (1), and
c3) wherein the control device (28) reads the stored application map and activates the linear drive (17) and/or the rotational drive (7) depending on the current position of the agricultural machine (1) and depending on the stored application map.

15. Agricultural machine (1) according to any one of the preceding claims,
**characterized**
a) **in that** the metering devices (5.1-5.12) are arranged next to one another in a metering row (5), wherein
- the metering row (4, 5) runs substantially horizontally, and/or
- the metering devices (5.1-5.12) are arranged substantially equidistantly along the metering row (5), and/or
b) **in that** the number of metering devices (5.1-5.12) is greater than 1, 2, 3, 4, 6 or 8, and/or
c) **in that** the drive shaft (6) is mounted rotatably in a plurality of bearing shells, in particular on each of the gearwheels (27) on the drive shaft (6).

## Revendications

1. Machine agricole (1), en particulier semoir (1), avec
a) un arbre d'entraînement (6) monté de manière à pouvoir tourner, destiné à entraîner mécaniquement la machine (1), à savoir à entraîner conjointement plusieurs éléments doseurs (5.1 - 5.12) de la machine agricole (1), l'arbre d'entraînement (6) pouvant être coulissé axialement pour régler un parmi plusieurs modes de fonctionnement de la machine (1) en fonction de la position axiale de l'arbre d'entraînement (6), **caractérisée en ce que** les modes de fonctionnement sont un mode de jalonnage et un mode normal.

2. Machine agricole (1) selon la revendication 1, **caractérisée en ce**
a) **qu'**un entraînement linéaire (17) est prévu pour faire coulisser axialement l'arbre d'entraînement (6),
b) **que** l'entraînement linéaire (17) fonctionne de préférence de manière pneumatique, hydraulique ou électrique, en particulier avec un moteur électrique.

3. Machine agricole (1) selon la revendication 2, **caractérisée en ce**
a) **que** l'arbre d'entraînement (6) est monté dans un palier radial (20), l'arbre d'entraînement (6) pouvant tourner dans le palier radial (20), tandis que l'arbre d'entraînement (6) ne peut pas être coulissé axialement dans le palier radial (20), et
b) **que** l'entraînement linéaire (17) agit sur le palier radial (20) et le palier radial (20) coulisse axialement conjointement avec l'arbre d'entraînement (6).

4. Machine agricole (1) selon la revendication 3, **caractérisée en ce**
a) **que** l'entraînement linéaire (17) comporte un actionneur (18), qui génère un mouvement de réglage, en particulier un mouvement de réglage linéaire, et
b) **que** l'entraînement linéaire (17) comporte un levier (19), en particulier un levier (19) à deux côtés, le levier (19) pouvant être pivoté autour d'un axe de pivotement (21) et convertissant le mouvement de réglage de l'actionneur (18) en un mouvement axial correspondant du palier radial (20) et ainsi également de l'arbre d'entraînement (6),
c) l'axe de pivotement (21) du levier (19) étant orienté de préférence à angle droit par rapport à l'axe de rotation de l'arbre d'entraînement (6).

5. Machine agricole (1) selon la revendication 4, **caractérisée en ce que** le levier (19) comporte sur une extrémité deux dents (22, 23), qui entourent le palier radial (20) de telle sorte qu'un mouvement de pivotement du levier (19) autour de l'axe de pivotement (21) donne lieu à un coulissement correspondant de l'arbre d'entraînement (6).

6. Machine agricole (1) selon la revendication 4 ou 5, **caractérisée en ce**
a) **que** le levier (19) comporte des bras (19.1, 19.2) de levier de longueur différente pour entraîner une démultiplication de force selon un rapport défini de démultiplication de force avec une force inférieure par l'actionneur (18) et une force supérieure sur l'arbre d'entraînement (6),
b) **que** le rapport de démultiplication de force est de préférence supérieur à 2:1, 3:1 ou 4:1.

7. Machine agricole (1) selon l'une des revendications précédentes, **caractérisée par** un entraînement en rotation (7) destiné à faire tourner l'arbre d'entraînement (6), en particulier avec un moteur électrique (8) et/ou une transmission par engrenages (9).

8. Machine agricole (1) selon la revendication 7 et l'une des revendications 2 - 6, **caractérisée en ce**
a) **que** l'entraînement linéaire (17) d'une part et l'entraînement en rotation (7) d'autre part s'engagent sur des extrémités opposées de l'arbre d'entraînement (6), et/ou
b) **que** l'entraînement linéaire (17) et l'entraînement en rotation (7) sont disposés, par rapport à une direction de traction de la machine agricole (1), sur le même côté des éléments doseurs (5.1 - 5.12), en particulier derrière les éléments doseurs (5.1 - 5.12).

9. Machine agricole (1) selon l'une des revendications précédentes,
**caractérisée en ce**
a) **que** la machine agricole (1) comporte deux rangées (4, 5) d'éléments doseurs, qui sont disposées côte à côte, s'étendent le long d'une ligne et comportent chacune plusieurs éléments doseurs (5.1 - 5.12), les deux rangées (4, 5) d'éléments doseurs pouvant être activées et désactivées de préférence indépendamment l'une de l'autre,
b) **que** la machine agricole (1) comporte, pour entraîner les deux rangées (4, 5) d'éléments doseurs, deux arbres d'entraînement (6) coaxiaux, chacun des deux arbres d'entraînement (6) entraînant respectivement une des deux rangées (4, 5) d'éléments doseurs,
c) **que** la machine agricole (1) comporte, pour entraîner les deux arbres d'entraînement (6), deux entraînements en rotation (7), chacun des deux entraînements en rotation (7) entraînant respectivement une des rangées (4, 5) d'éléments doseurs,
d) **que** les deux entraînements en rotation (7) sont disposés chacun à l'extérieur et agissent sur les extrémités extérieures de l'arbre d'entraînement (6) respectif, et
e) **que** la machine agricole (1) comporte pour faire coulisser conjointement les deux arbres d'entraînement un entraînement linéaire commun (17), qui agit sur les deux arbres d'entraînement (6), et
f) **que** l'entraînement linéaire commun (17) est disposé au centre et agit sur les extrémités situées au centre des deux arbres d'entraînement (6).

10. Machine agricole (1) selon l'une des revendications 7 à 9, **caractérisée par** un couplage (10), qui relie l'entraînement en rotation / les entraînements en rotation (7) de manière rigide en rotation, toutefois de manière mobile axialement à l'arbre d'entraînement (6).

11. Machine agricole (1) selon la revendication 10, **caractérisée en ce**
a) **que** le couplage (10) comporte une liaison par arbre à nervures (10) avec un arbre à nervures (11) et un moyeu à nervures (12), l'arbre à nervures (11) et le moyeu à nervures (12) s'imbriquant l'un dans l'autre de manière rigide en rotation et pouvant être coulissés relativement l'un par rapport à l'autre,
b) **que** de préférence l'arbre à nervures (11) est entraîné par l'entraînement en rotation (7), tandis que le moyeu à nervures (12) est relié de manière rigide en rotation à l'arbre d'entraînement (6).

12. Machine agricole (1) selon l'une des revendications précédentes,
**caractérisée en ce**
a) **que** l'arbre d'entraînement (6) entraîne plusieurs éléments doseurs (5.1 - 5.12),
b) **que**, dans un mode de jalonnage, au moins un des éléments doseurs (5.1 - 5.12) n'est pas entraîné en tant qu'élément doseur de jalonnage pour que celui-ci ne distribue aucun produit dosé sur un champ dans une allée, tandis que les autres éléments doseurs (5.1 - 5.12) sont entraînés comme des éléments doseurs normaux également dans le mode de jalonnage pour distribuer le produit dosé,
c) **que** dans un mode normal chacun des éléments doseurs (5.1 - 5.12) est entraîné pour distribuer le produit dosé,
d) **que** l'arbre d'entraînement (6) peut être coulissé axialement entre une position de jalonnage pour le mode de jalonnage et une position de base pour le mode normal, et
e) **que** l'arbre d'entraînement (6) entraîne, dans la position de base, la totalité des éléments doseurs (5.1 - 5.12), y compris l'élément doseur de jalonnage de telle sorte que la totalité des éléments doseurs (5.1 - 5.12) distribuent le produit dosé, et
f) **que** l'arbre d'entraînement (6) n'entraîne pas, dans la position de jalonnage, l'au moins un élément doseur de jalonnage, mais seulement les éléments doseurs normaux.

13. Machine agricole (1) selon la revendication 12, **caractérisée en ce**
a) **que** respectivement une roue dentée (27) sur l'arbre d'entraînement (6) est associée aux divers éléments doseurs (5.1 - 5.12) pour l'entraînement, les diverses roues dentées (27) comportant chacune une denture intérieure, et/ou
b) **que** l'arbre d'entraînement (6) pour les divers éléments doseurs (5.1 - 5.12) respectivement supporte un premier entraîneur (24), le premier entraîneur (24)
b1) étant monté de manière solidaire en rotation sur l'arbre d'entraînement (6),
b2) étant fixé axialement sur l'arbre d'entraînement (6),
b3) supportant une denture extérieure, qui peut venir en prise avec la denture intérieure de la roue dentée (27) associée sur l'arbre d'entraînement (6) pour entraîner la roue dentée (27),
b4) entoure l'arbre d'entraînement (6) de préférence en forme de manchon, et/ou
c) **que** l'arbre d'entraînement (6) pour les divers éléments doseurs (5.1 - 5.12) respectivement supporte un deuxième entraîneur (25), le deuxième entraîneur (25)
c1) pouvant être coulissé axialement sur l'arbre d'entraînement (6),
c2) pouvant tourner par rapport à l'arbre d'entraînement (6),
c3) supportant une denture extérieure, qui peut venir en prise avec la denture intérieure de la roue dentée (27) associée sur l'arbre d'entraînement (6) pour entraîner la roue dentée (27),
c4) entourant l'arbre d'entraînement (6) de préférence en forme de manchon, et/ou
d) **que** le premier entraîneur (24) et le deuxième entraîneur (25) comportent chacun une denture frontale, pour que le premier entraîneur (24) monté de manière solidaire en rotation sur l'arbre d'entraînement (6) puisse entraîner et faire tourner le deuxième entraîneur (25) monté de manière à pouvoir tourner sur l'arbre d'entraînement (6), et/ou
e) **que** l'arbre d'entraînement (6) supporte plusieurs éléments de configuration (26), qui sont associés aux divers éléments doseurs (5.1 - 5.12) et qui fixent l'élément doseur des éléments doseurs (5.1 - 5.12), qui est un élément doseur de jalonnage,
les éléments de configuration (26)
e1) étant des pièces d'écartement (26), la position axiale des pièces d'écartement (26) le long de l'arbre d'entraînement (6) fixant l'élément doseur des éléments doseurs (5.1 - 5.12), qui est un élément doseur de jalonnage,
- une pièce d'écartement (26) étant disposée entre le premier entraîneur (24) et le deuxième entraîneur (25) dans le cas de l'élément doseur de jalonnage sur l'arbre d'entraînement (6), et/ou
- les pièces d'écartement (26) étant disposées dans le cas des éléments doseurs normaux sur l'arbre d'entraînement (6) chacune axialement à côté du premier entraîneur (24) et du deuxième entraîneur (25), qui sont directement adjacents l'un à l'autre et sont reliés l'un à l'autre de manière solidaire en rotation par des dentures frontales, et/ou
- les diverses pièces d'écartement (26) étant respectivement des manchons d'écartement (26), qui possèdent une entaille continue axialement et peuvent de ce fait être serrés latéralement sur l'arbre d'entraînement (6) et être retirés de l'arbre d'entraînement (6) pour positionner les manchons d'écartement sur une autre position axiale, l'entaille continue axialement présentant dans une direction périphérique du manchon d'écartement (26) une largeur qui est inférieure au diamètre de l'arbre d'entraînement (6), et/ou
- les manchons d'écartement (26) étant élastiques sur ressorts, pour que les manchons d'écartement (26) puissent être coincés sur l'arbre d'entraînement (6) et puissent toutefois être retirés de l'arbre d'entraînement (6), et/ou
- les diverses pièces d'écartement (26) ne comportant à l'extérieur aucune denture et n'entraînant pas non plus de ce fait les roues dentées (27) sur l'arbre d'entraînement (6) lorsque les pièces d'écartement (26) coïncident axialement avec les roues dentées sur l'arbre d'entraînement (6), et/ou
- dans la position de base de l'arbre d'entraînement (6), la totalité des manchons d'écartement (26) étant décalés dans la direction axiale par rapport aux roues dentées (27) sur l'arbre d'entraînement (6) et les premiers entraîneurs (24) venant en prise par leur denture extérieure avec la denture intérieure des roues dentées (27) sur l'arbre d'entraînement (6) de telle sorte que l'arbre d'entraînement (6) fait tourner dans la position de base la totalité des roues dentées (27) sur l'arbre d'entraînement (6) et entraîne également la totalité des éléments doseurs (5.1 - 5.12), et/ou
- dans la position de jalonnage de l'arbre d'entraînement (6), au moins un des manchons d'écartement (26) étant disposé dans la direction axiale à l'intérieur de la denture intérieure d'une des roues dentées (27) sur l'arbre d'entraînement (6) de telle sorte que ladite roue dentée (27) n'est pas entraînée par l'arbre d'entraînement (6) et l'élément doseur de jalonnage associé ne dose aucun produit dosé et/ou
e2) étant des éléments de liaison à complémentarité de forme, en particulier des boulons, pour relier de manière solidaire en rotation l'arbre d'entraînement (6) aux roues dentées sur l'arbre d'entraînement (6), qui servent à entraîner les éléments doseurs normaux.

14. Machine agricole (1) selon l'une des revendications précédentes,
**caractérisée en ce**
a) **que** la machine agricole (1) comporte un dispositif de commande (28) destiné à piloter automatiquement l'entraînement linéaire (17) et/ou l'entraînement en rotation (7), en particulier
a1) conformément à un circuit de jalonnage et/ou
a2) conformément à un rythme de jalonnage spécifié, de telle sorte que l'arbre d'entraînement (6) adopte soit la position de jalonnage soit la position de base dans une séquence temporelle conformément au rythme de jalonnage spécifié, et/ou
b) **que** la machine agricole (1) comporte un système de définition de position (29), en particulier un système de définition de position assisté par satellites, pour définir la position de la machine agricole (1), le dispositif de commande (28) pilotant l'entraînement linéaire (17) et/ou l'entraînement en rotation (7) en fonction de la position déterminée de la machine agricole (1), et/ou
c) **que** la machine agricole (1) comporte une mémoire de carte d'application (30),
c1) la mémoire de carte d'application (30) contenant une carte d'application stockée,
c2) la carte d'application stockée spécifiant le fonctionnement souhaité de la machine agricole (1) en fonction de la position de la machine agricole (1), et c3) le dispositif de commande (28) lisant la carte d'application stockée et pilotant l'entraînement linéaire (17) et/ou l'entraînement en rotation (7) en fonction de la position actuelle de la machine agricole (1) et en fonction de la carte d'application stockée.

15. Machine agricole (1) selon l'une des revendications précédentes,
**caractérisée en ce**
a) **que** les éléments doseurs (5.1 - 5.12) sont disposés côte à côte dans une rangée (5) d'éléments doseurs,
- la rangée (4, 5) d'éléments doseurs s'étendant sensiblement horizontalement, et/ou
- les éléments doseurs (5.1 - 5.12) étant disposés sensiblement à équidistance le long de la rangée (5) d'éléments doseurs, et/ou
b) **que** le nombre des éléments doseurs (5.1 - 5.12) est supérieur à 1, 2, 3, 4, 6 ou 8, et/ou
c) **que** l'arbre d'entraînement (6) est monté de manière à pouvoir tourner dans plusieurs coussinets, en particulier sur chacune des roues dentées (27) sur l'arbre d'entraînement (6).
